# FASCICULE DE BREVET EUROPEEN

(11) **EP 3 954 022 B1**
(45) Date de publication et mention de la délivrance du brevet: **13.09.2023**
(21) Numéro de dépôt: 20715065.7
(22) Date de dépôt: 31.03.2020
(51) Int. Cl.: H02K 1/20, H02K 5/128, H02K 9/02, B64C 11/00, B64C 27/20, B64D 35/06

(54) **PROPULSEUR D'AÉRONEF**
FLUGZEUG-PROPELLER
AIRCRAFT PROPELLER

(30) Priorité: 12.04.2019 FR 1903954
(43) Date de publication de la demande: 16.02.2022
(73) Titulaire: SAFRAN, 75015 Paris (FR)
(72) Inventeur: SABER, Christelle, 77550 MOISSY-CRAMAYEL (FR); MERLE, Sébastien, 77550 MOISSY-CRAMAYEL (FR); AYAT, Sabrina, 77550 MOISSY-CRAMAYEL (FR)
(74) Mandataire: Ernest Gutmann - Yves Plasseraud S.A.S.
(86) Numéro de dépôt international: PCT/EP2020/059129
(87) Numéro de publication internationale: WO 2020/207862

(56) Documents cités:
- EP-A1- 2 878 795
- WO-A1-2015/005776
- WO-A1-2019/020684
- WO-A2-2005/072233
- WO-A2-2014/021798
- DE-A1-102007 016 380
- US-A- 5 474 429
- US-A1- 2004 069 901
- US-A1- 2012 235 412
- US-B2- 7 032 859

## Description

### Domaine technique de l'invention

L'invention concerne le domaine de l'aéronautique et plus particulièrement le domaine des propulseurs pour un aéronef. Plus spécifiquement, l'invention concerne le domaine des propulseurs à moteur électrique.

### Etat de la technique antérieure

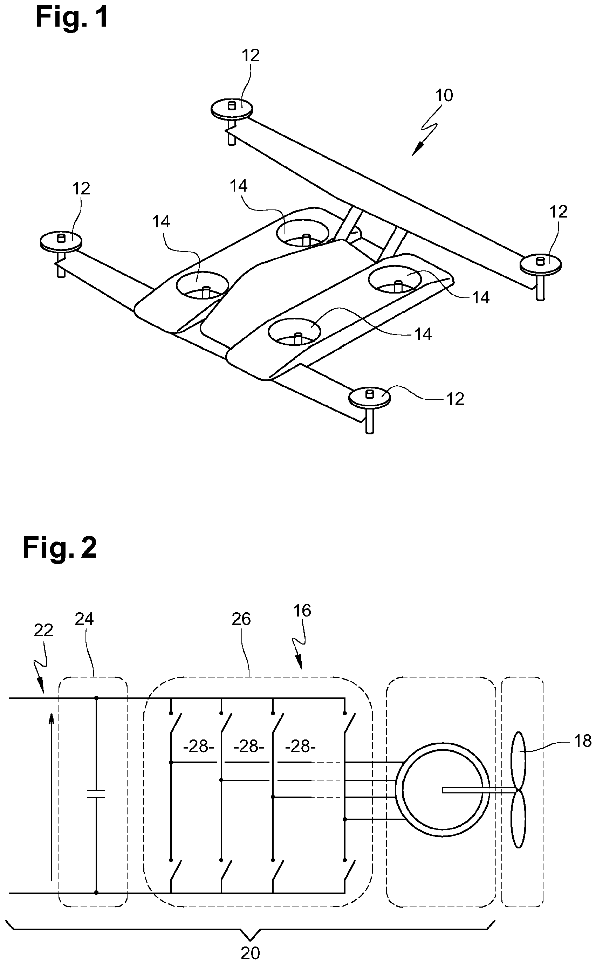

On connait des aéronefs comportant un moteur destiné à être utilisé durant des phases de vol spécifiques. En particulier, les aéronefs à décollage et atterrissage verticaux, également connus sous l'acronyme anglais de VTOL (Vertical Take-off and Landing aircraft) comprennent classiquement un moteur pour le décollage vertical dont l'utilisation est limitée à cette phase ou à une phase de vol stationnaire ou semi-stationnaire. La figure 1 illustre un aéronef 10 comportant plusieurs hélices 12 non carénés destinées à assurer un vol d'avance et plusieurs hélices carénés 14 destinées à assurer un vol stationnaire. Ces hélices 12, 14 peuvent être entrainées par des moteurs électriques. L'un des défis majeurs de l'utilisation d'un moteur électrique pour entrainer une hélice réside dans son intégration. L'électrification de plus en plus poussée des systèmes propulsifs aéronautiques requiert l'augmentation de la densité massique de puissance des convertisseurs électriques et électromécaniques. Ce critère est indispensable pour assurer la compacité de l'ensemble de la chaîne d'entraînement électrique.

La figure 2 représente un schéma d'une chaine 20 électro-mécanique d'entrainement d'une hélice 18 par un moteur électrique 19. Une source de tension 22 continue V_{dc} est reliée aux bornes d'un condensateur 24. Un convertisseur d'électronique de puissance 26, de type onduleur, comportant des interrupteurs de puissance 28 convertit l'énergie électrique continue en entrée en une énergie électrique alternative en sortie. Les sorties du convertisseur de puissance 26 alimentent les enroulements du stator du moteur électrique polyphasé. L'énergie électrique au stator du moteur électrique est convertie en énergie mécanique au rotor lequel est relié mécaniquement à l'hélice 18.

Plusieurs intégrations de l'électronique de puissance et du moteur électrique 19 sont possibles. Par exemple, la solution la plus répandue est de rapprocher l'électronique de puissance du stator du moteur électrique 19. On garde deux blocs séparés et l'électronique de puissance est placée à la surface du carter du moteur électrique. Cette solution a le mérite d'avoir un processus de fabrication simple. Cependant, l'évacuation des pertes caloriques générées dans l'électronique de puissance s'avère problématique au regard des surfaces d'échange thermique limitées et surtout lorsque des fréquences de commutation élevées sont envisagées. L'électronique ne pouvant fonctionner qu'à des températures inférieures à celles que peuvent tolérer les moteurs électriques, cet échauffement peut conduire à la défaillance de certains composants de puissance, en particulier les semi-conducteurs de puissance.

Dans une autre solution, il a été proposé de monter l'électronique de puissance à une extrémité axiale du moteur électrique. Toutefois, cette solution n'est là pas encore satisfaisante du point de vue de l'encombrement. EP2878795 divulgue un exemple de moteur électrique pour propulseur d'aéronef avec refroidissement.

### Résumé de l'invention

Le présent document concerne un propulseur d'aéronef comme défini dans la revendication 1. L'agencement proposé permet de gagner en compacité puisque les circuits de l'électronique de puissance sont intégrés de manière annulaire dans une partie annulaire solidaire du carénage du propulseur qui entoure l'hélice. Par ailleurs, le refroidissement desdits composants de puissance est amélioré puisque la surface d'échange thermique est augmentée par rapport à la technique antérieure. Les circuits de puissance sont aptes à réaliser une conversion de puissance entre une tension continue et une tension alternative.

Selon une caractéristique, le moteur électrique comprend une partie annulaire rotorique entourant les extrémités radialement externes des pales et solidaires de celles-ci.

La formation d'un espace annulaire permet une circulation d'air de refroidissement sur une face radialement interne de la partie annulaire solidaire du carénage ce qui permet de mieux refroidir les circuits de l'électronique de puissance logés dans la partie annulaire solidaire du carénage. Par ailleurs, l'air entrant dans l'espace annulaire peut refroidir la partie annulaire statorique du moteur électrique.

Dans une autre réalisation, le moteur électrique peut comprendre une partie annulaire rotorique qui est solidaire des extrémités radialement internes des pales. Cette partie annulaire rotorique peut entourer une partie statorique, possiblement annulaire, du moteur électrique portant des bobinages, cette partie statorique du moteur électrique étant reliée à la partie annulaire solidaire du carénage de l'aéronef.

La première hélice ou tout autre hélice du propulseur peut être guidée en rotation dans un moyeu central solidaire de la partie annulaire solidaire du carénage. La liaison fixe entre les deux pièces précitées pouvant être réalisée par des bras radiaux de liaisons, par exemple régulièrement répartis autour de l'axe de rotation de la ou des hélices.

Aussi, ladite au moins une première hélice peut être dépourvue de moyeu central relié aux extrémités radialement internes des pales.

Les moyens d'alimentation électrique peuvent comprendre une source de tension reliée en parallèle à un condensateur conformé de manière annulaire à l'intérieur de la partie annulaire du carénage.

Le propulseur peut comprendre une seconde hélice contrarotative de la première hélice, cette seconde hélice étant agencée en aval de ladite première hélice et étant entrainée en rotation par un second moteur électrique. L'utilisation de deux moteurs électriques permet de rendre indépendant chaque hélice l'une de l'autre et autorise des vitesses de rotations différentes. Lorsqu'un moyeu central fixe est prévu, la liaison rigide entre le moyeu fixe supportant la partie annulaire statorique du moteur électrique et la partie annulaire statorique solidaire du carénage est réalisée par des bras radiaux comme indiqué ci-dessus pour permettre la circulation d'air depuis la première hélice amont vers la seconde hélice contrarotative aval.

### Brève description des figures

[Fig. 1], déjà décrite précédemment, représente une réalisation d'un aéronef d'un type connu ;
[Fig. 2], déjà décrite précédemment, représente un schéma électro-mécanique d'entrainement d'une hélice ;
[Fig. 3],
[Fig. 4],
[Fig. 5],

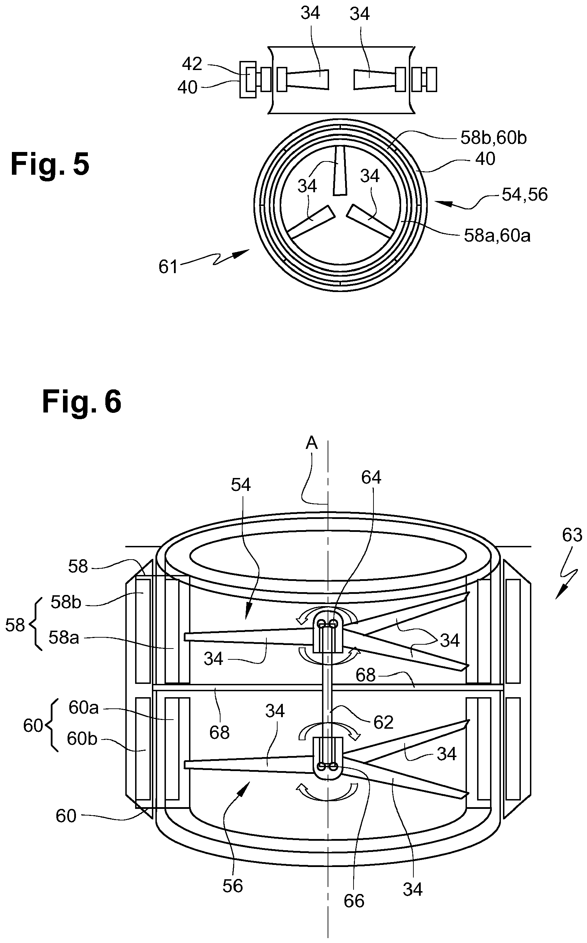

[Fig. 6], et

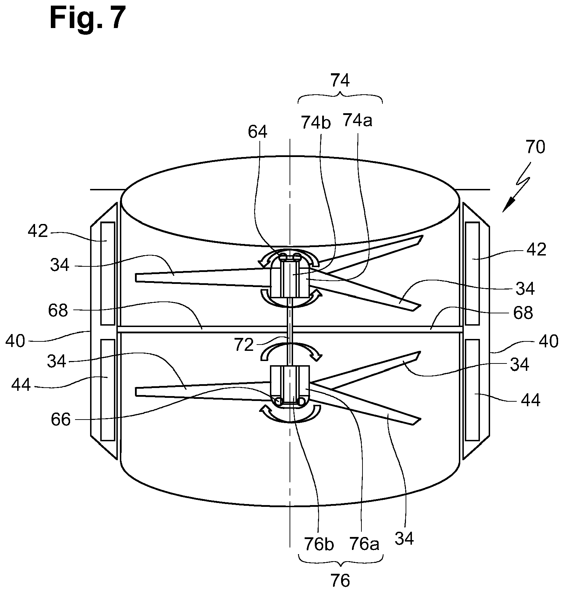

[Fig. 7] représentent différents modes de réalisation selon la description ci-après.

### Description détaillée de l'invention

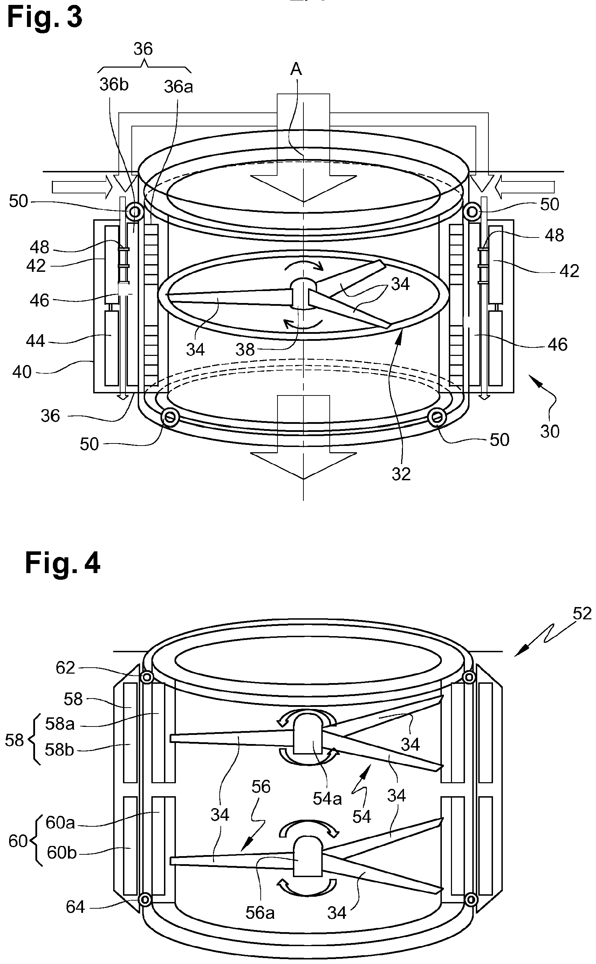

On se réfère maintenant à la figure 3 qui représente une première réalisation de l'invention représentant un propulseur 30 d'aéronef comportant une hélice 32 pourvue d'une pluralité de pales 34 s'étendant radialement par rapport à un axe A de rotation du propulseur 30. L'hélice 32 est entrainée en rotation par un moteur électrique 36 comportant une partie annulaire rotorique 36a et une partie annulaire statorique 36b. Les extrémités radialement internes des pales 34 sont reliées solidairement les unes aux autres par un moyeu central 38 et les extrémités radialement externes sont solidaires de la partie annulaire rotorique 36a qui entoure donc extérieurement les pales 34. Comme cela est visible sur la figure 3, la partie annulaire statorique 36b du moteur électrique 36 est agencée radialement à l'extérieur de la partie annulaire rotorique 36a du moteur électrique 36. La partie annulaire statorique 36b du moteur électrique 36 porte des bobinages destinés à réaliser un couplage électromagnétique avec l'induit porté par la partie annulaire rotorique 36a.

Egalement, on observe que cette partie annulaire statorique 36b du moteur électrique 36 est entourée extérieurement par une partie annulaire 40 du carénage du propulseur 30. Pour faire fonctionner le moteur électrique 36, selon l'invention, on agence les circuits 42 de l'électronique de puissance dans la partie annulaire 40 du carénage du propulseur 30 et on les répartit de manière annulaire ce qui permet de réduire l'encombrement. Par ailleurs, ce positionnement permet d'assurer un refroidissement des circuits 42 de puissance puisqu'ils sont disposés à proximité de la circulation d'air extérieur. Les circuits de puissance 42 sont reliés à un condensateur 44 qui est lui aussi conformé de manière annulaire dans la partie annulaire 40 du carénage du propulseur 30. Une source de tension (non représentée) est reliée au condensateur 44. La source de tension, le condensateur et les circuits de puissance forment des moyens d'alimentation électrique du moteur électrique.

Pour encore améliorer le refroidissement, un espace annulaire 46 est formé entre la partie annulaire 40 du carénage et la partie annulaire statorique 36b du moteur électrique 36, cet espace annulaire 46 débouchant selon l'axe A de l'hélice 32 et vers l'amont de celle-ci par rapport à l'écoulement d'air. De cette manière, l'effet d'aspiration créé par l'hélice 32 induit une circulation d'air dans l'espace annulaire 46, ce qui permet de ventiler la face radialement interne de la partie annulaire 40 du carénage et ainsi d'encore mieux refroidir les circuits 42 de l'électronique de puissance. On observe que les câbles 48 de connexion électrique aux bobinages traversent l'espace annulaire 46.

Pour assurer le guidage en rotation de la partie annulaire rotorique 36a du moteur électrique 36 sur la partie annulaire statorique 36b du moteur électrique 36, on peut monter des paliers 50 de roulement entre lesdites parties annulaires rotorique 36a et statorique 36b.

La figure 4 représente un autre mode de réalisation de l'invention dans lequel le propulseur 52 comprend non plus une seule hélice mais une première hélice 54 et une seconde hélice 56, les deux hélices 54, 56 étant configurées pour tourner dans des sens opposés, ce qui permet de réduire la vitesse nominale de rotation de chaque hélice 54, 56. Chaque hélice est ici entrainée par son propre moteur électrique lequel peut avoir la même configuration que ce qui a été décrit en référence à la figure 3. On observe que la partie annulaire statorique 58b du premier moteur électrique 58 et la partie annulaire statorique 60b du second moteur électrique 60 sont fixées l'une à l'autre et au moins un premier palier de roulement 62 assure le guidage en rotation de la partie annulaire rotorique 58a dans un premier sens de rotation relativement à la première partie annulaire statorique 58b du premier moteur électrique 58 et au moins un second palier de roulement 64 assure le guidage en rotation de la seconde partie annulaire rotorique 60a dans un second sens de rotation relativement à la seconde partie annulaire statorique 60b du second moteur électrique 60. Sur la figure 4, la partie annulaire du carénage n'est pas représentée mais peut à la manière de ce qui a été représenté en figure 3, entourer la première partie annulaire statorique 58b du premier moteur électrique 58 et la seconde partie annulaire statorique 60b du second moteur électrique 60 et un espace annulaire pouvant y être délimiter.

Sur la figure 4, chaque hélice 54, 56 du propulseur 52 est reliée à son propre moyeu 54a, 56a central. Bien évidemment, chaque hélice 54, 56 pourrait être dépourvue de moyeu central comme représenté sur la réalisation de la figure 5. Cela pourrait aussi être le cas pour la réalisation de la figure 3.

La figure 6 représente encore une autre réalisation d'un propulseur 63 de l'invention qui est similaire à ce qui a été décrit en référence à la figure 4. L'espace annulaire et la partie annulaire du carénage ne sont pas représentés. Dans cette réalisation, un moyeu central 62 fixe assure le guidage en rotation de la première hélice 54 et de la seconde hélice 56 par l'intermédiaire de paliers 64, 66 de roulement. Ce moyeu central 62 qui s'étend selon l'axe A du propulseur 63 est relié à des bras radiaux 68 de liaisons aux parties annulaires statoriques 58b, 60b des premier 58 et second 60 moteurs électriques. Ces bras 68 sont agencés axialement entre la première hélice 54 et la seconde hélice 56 et sont conformés de manière à assurer une reprise d'effort tout en évitant d'impacter au maximum l'écoulement d'air de la première hélice 54 vers la seconde hélice 56.

Enfin, la figure 7 représente un exemple d'un propulseur 70 à deux hélices 54, 56 contrarotatives, dans laquelle les circuits 42 de puissance sont bien évidemment montés dans la partie annulaire 40 du carénage. Cette partie 40 est reliée par des bras 68 radiaux à un moyeu central 72 lequel est entouré à une extrémité amont par une partie statorique 74b du premier moteur électrique 74 et à une extrémité aval par une partie statorique 76b du second moteur électrique 76. Chacune des parties statoriques 74b, 76b des moteurs électriques 74, 76 est entourée par une partie annulaire rotorique 74a, 76a des premier 74 et second 76 moteur électriques qui est solidaire des extrémités radialement internes des pales 34. Au moins un palier de roulement 64, 66 est intercalé entre chaque partie statorique 58b, 60b et une partie annulaire rotorique 58a, 60a d'un moteur électrique 58, 60.

## Revendications

1. Propulseur d'aéronef (30) comprenant au moins une première hélice (32) pourvues d'une pluralité de pales radiales (34) s'étendant autour d'un axe (A) de rotation de ladite première hélice (32) laquelle est entrainée en rotation par un premier moteur électrique (36) dont les moyens d'alimentation électrique comprennent des circuits de puissance (42) portés par un carénage du propulseur, propulseur dans lequel les circuits de l'électronique de puissance (42) sont agencés de manière annulaire dans une partie annulaire (40) solidaire du carénage du propulseur (30), cette partie annulaire (40) étant agencée autour de ladite première hélice (32), la partie annulaire (40) solidaire du carénage entourant une partie annulaire statorique (36b) du moteur électrique (36), **caractérisé en ce que** la partie annulaire (40) solidaire du carénage et la partie annulaire statorique (36b) du moteur électrique (36) délimitent ensemble un espace annulaire (46) dont une extrémité débouche selon l'axe (A) de la première hélice (32) et vers l'amont de la première l'hélice (32) par rapport à l'écoulement d'air.

2. Propulseur selon la revendication 1, dans lequel le moteur électrique (36) comprend une partie annulaire rotorique (36a) entourant les extrémités radialement externes des pales (34) et solidaires de celles-ci.

3. Propulseur selon la revendication 1 ou 2, dans lequel le moteur électrique (74, 76) comprend une partie annulaire rotorique (74a, 76a) solidaire des extrémités radialement internes des pales (34).

4. Propulseur selon la revendication 3, dans lequel la partie annulaire rotorique (74a, 76a) entoure une partie statorique (74b, 76b) du moteur électrique (74, 76) portant des bobinages, cette partie statorique (74b, 76b) du moteur électrique (74, 76) étant relié à la partie annulaire solidaire du carénage de l'aéronef.

5. Propulseur selon l'une des revendications 1 à 4, dans lequel ladite au moins une première hélice est guidée en rotation dans un moyeu central solidaire de la partie annulaire solidaire du carénage.

6. Propulseur selon la revendication 1 ou 2, dans lequel ladite au moins une première hélice (54, 56) est dépourvue de moyeu central relié aux extrémités radialement internes des pales (34).

7. Propulseur selon l'une des revendications 1 à 6, dans lequel les moyens d'alimentation électrique comprennent une source de tension reliée en parallèle à un condensateur (44) conformé de manière annulaire à l'intérieur de la partie annulaire (40) du carénage.

8. Propulseur selon l'une des revendications 1 à 5, dans lequel il comprend une seconde hélice (56) contrarotative de la première hélice (54), cette seconde hélice (56) étant agencée en aval de ladite première hélice (54) et étant entrainée en rotation par un second moteur électrique.

## Patentansprüche

1. Antrieb (30) für Luftfahrzeuge, enthaltend zumindest einen ersten Propeller (32), der mit einer Mehrzahl von radialen Propellerflügeln (34) versehen ist, die sich um eine Drehachse (A) des ersten Propellers (32) erstrecken, der durch einen ersten Elektromotor (36) in Drehung versetzt wird, dessen Stromversorgungsmittel Leistungselektronikschaltungen (42) umfassen, die von einer Verkleidung des Antriebs getragen werden,
wobei bei dem Antrieb die Leistungselektronikschaltungen (42) ringförmig in einem ringförmigen Teil (40) angeordnet sind, das fest mit der Verkleidung des Antriebs (30) verbunden ist, wobei dieses ringförmige Teil (40) um den ersten Propeller (32) herum angeordnet ist, wobei das mit der Verkleidung fest verbundene ringförmige Teil (40) einen ringförmigen Statorteil (36b) des Elektromotors (36) umgibt,
**dadurch gekennzeichnet, dass** das mit der Verkleidung fest verbundene ringförmige Teil (40) und der ringförmige Statorteil (36b) des Elektromotors (36) gemeinsam einen ringförmigen Raum (46) begrenzen, von dem ein Ende entlang der Achse (A) des ersten Propellers (32) und bezogen auf die Luftströmung stromaufwärts des ersten Propellers (32) mündet.

2. Antrieb nach Anspruch 1,
wobei der Elektromotor (36) einen ringförmigen Rotorteil (36a) umfasst, der die radial äußeren Enden der Propellerflügel (34) umgibt, welche fest mit diesen fest verbunden sind.

3. Antrieb nach Anspruch 1 oder 2,
wobei der Elektromotor (74, 76) einen ringförmigen Rotorteil (74a, 76a) umfasst, der fest mit den radial inneren Enden der Enden der Propellerflügel (34) verbunden ist.

4. Antrieb nach Anspruch 3,
wobei der ringförmige Rotorteil (74a, 76a) einen Wicklungen tragenden Statorteil (74, 76b) des Elektromotors (74, 76) umgibt, wobei dieser Statorteil (74b, 76b) des Elektromotors (74, 76) mit dem fest mit der Verkleidung des Luftfahrzeugs verbundenen ringförmigen Teil verbunden ist.

5. Antrieb nach einem der Ansprüche 1 bis 4,
wobei der zumindest eine erste Propeller in einer zentralen Nabe drehbar geführt ist, die mit dem fest mit der Verkleidung verbundenen ringförmigen Teil fest verbunden ist.

6. Antrieb nach Anspruch 1 oder 2,
wobei der zumindest eine erste Propeller (54, 56) keine mit den radial inneren Enden der Propellerflügel (34) verbundene, zentrale Nabe hat.

7. Antrieb nach einem der Ansprüche 1 bis 6,
wobei die Stromversorgungsmittel eine Spannungsquelle umfassen, die parallel zu einem Kondensator (44) geschaltet ist, der innerhalb des ringförmigen Teils (40) der Verkleidung ringförmig ausgebildet ist.

8. Antrieb nach einem der Ansprüche 1 bis 5,
wobei er einen zweiten Propeller (56) umfasst, der gegenläufig zum ersten Propeller (54) ist, wobei dieser zweite Propeller (56) stromabwärts des ersten Propellers (54) angeordnet ist und von einem zweiten Elektromotor in Drehung versetzt wird.

## Claims

1. An aircraft thruster (30) comprising at least a first propeller (32) provided with a plurality of radial blades (34) extending about an axis (A) of rotation of the said first propeller (32), which is driven in rotation by a first electric motor (36), the power supply means of which comprise power circuits (42) carried by a fairing of the thruster, aircraft thruster wherein the circuits of the power electronics (42) are arranged in an annular part (40) integral with the fairing of the thruster (30), this annular part (40) being arranged around said first propeller (32), the annular part (40) integral with the fairing surrounding a stator annular part (36b) of the electric motor (36), **characterized in that** the annular part (40) integral with the fairing and the stator annular part (36b) of the electric motor (36) together delimit an annular space (46), one end of which opens out along the axis (A) of the first propeller (32) and towards the upstream side of the first propeller (32) with respect to the air flow

2. A thruster according to claim 1, wherein the electric motor (36) comprises an annular rotor part (36a) surrounding and integral with the radially outer ends of the blades (34).

3. A thruster according to claim 1 or 2, wherein the electric motor (74,76) comprises an annular rotor part (74a,76a) integral with the radially inner ends of the blades (34).

4. A thruster according to claim 3, wherein the annular rotor part (74a,76a) surrounds a stator part (74b,76b) of the electric motor carrying windings, this stator part (74b,76b) of the electric motor (74,76) being connected to the annular part integral with the aircraft fairing.

5. A thruster according to one of claims 1 to 4, wherein said at least one first propeller is guided in rotation in a central hub integral with the annular part integral with the fairing.

6. A thruster according to claim 1 or 2, wherein said at least one first propeller (54, 56) lacks a central hub connected to the radially inner ends of the blades (34).

7. A thruster according to any one of claims 1 to 6, wherein the power supply means comprises a voltage source connected in parallel to a capacitor (44) annularly shaped within the annular part (40) of the fairing.

8. A thruster according to one of claims 1 to 5, wherein it comprises a second propeller (56) counter-rotating the first propeller (54), this second propeller (56) being arranged downstream of said first propeller (54) and being driven in rotation by a second electric motor.
